Europäisches Patentamt

European Patent Office

Office européen des brevets

(19)

(11) **EP 0 476 384 B1**

(12) **EUROPÄISCHE PATENTSCHRIFT**

(45) Veröffentlichungstag und Bekanntmachung des Hinweises auf die Patenterteilung:
**29.10.1997  Patentblatt 1997/44**

(51) Int Cl.⁶: **G02B 6/10**

(21) Anmeldenummer: **91114483.0**

(22) Anmeldetag: **28.08.1991**

(54) **Wellenleitergitter bestehend aus einer sich verzweigenden Struktur mit mehreren nebeneinander angeordneten Auskoppel-Endflächen optischer Wellenleiter**

Optical waveguide grating consisting of a branching structure with several end-areas arranged side by side for output of optical waves

Réseau optique aux guides d'ondes comprenant une structure ramifiante avec plusieurs bouts arrangés côte à côte pour sortie d'ondes optiques

(84) Benannte Vertragsstaaten:
**DE FR GB IT**

(30) Priorität: **21.09.1990  DE 4029971**

(43) Veröffentlichungstag der Anmeldung:
**25.03.1992  Patentblatt 1992/13**

(73) Patentinhaber: **SIEMENS AKTIENGESELLSCHAFT
80333 München (DE)**

(72) Erfinder: **März, Reinhard, Dr.
W-8000 München 80 (DE)**

(56) Entgegenhaltungen:
**EP-A- 0 204 980          EP-B- 0 126 686
US-A- 4 515 428          US-A- 4 756 587**

- **Electr. Letters, Vol.24, No.7, p.385-386**
- **Electr. Letters, Vol.26, No.2, p.87-88**

**Beschreibung**

Die Erfindung betrifft ein optisches Gitter mit mehreren nebeneinander angeordneten Auskoppel-Endflächen optischer Wellenleiter nach dem Oberbegriff des Patentanspruchs 1.

Ein Gitter der genannten Art ist aus M.K. Smit: "New Focusing and Dispersive Planar Component Based on Phased Arrays", Electron. Lett. 24 (1988), S. 385-386 bekannt. Bei diesem bekannten Gitter sind einunddreißig nebeneinander angeordnete streifenartige optische Wellenleiter vorhanden, von denen jeder aus einem $Al_2O_3$-Rippenwellenleiter mit einer Breite von 3 µm besteht. Der Abstand zwischen benachbarten Rippenwellenleitern beträgt jeweils 6 µm. Die Rippenwellenleiter sind entlang eines Segments mit einem Öffnungswinkel von 30° auf konzentrischen Kreisen mit Radien von 910 µm bis 1090 µm geführt. Jeder Rippenwellenleiter weist auf einer Seite eine Einkoppel-Endfläche zum Einkoppeln eines Anteils einer in das Gitter einzukoppelnden optischen Welle und auf der anderen Seite die Auskoppel-Endfläche zum Auskoppeln dieses Anteils aus dem Wellenleiter auf. Dadurch, daß die Wellenleiter auf konzentrischen Kreisen entlang eines Segments mit einem bestimmten Öffnungswinkel geführt sind, weisen benachbarte Wellenleiter einen Unterschied in ihrer optischen Länge auf, der für alle benachbarten Wellenleiter gleich groß ist. Dieser Unterschied der optischen Längen der Wellenleiter bewirkt eine gegenseitige Phasenverschiebung der in ihnen geführten Anteile der in das Gitter einzukoppelnden optischen Welle von Ausgangsapertur zu Ausgangsapertur des Gitters, wobei diese Phasenverschiebung für alle Paare benachbarter Wellenleiter gleich groß ist.

Das bekannte Gitter wurde für experimentelle Untersuchungen bei einer Wellenlänge λ der einzukoppelnden optischen Welle von etwa 0,63 µm betrieben. Nach den veröffentlichten experimentellen Werten liegt Δλ/λ bei 0,5 %, d.h. Δλ bei etwa 3,3 nm bei einer Nebensprechdämpfung von 20 dB und einem aus einer Photographie ablesbaren Winkel δθ zwischen zwei Beugungsordnungen von etwa 3°, wobei nicht klar zu entnehmen ist, ob die angegebene Nebensprechdämpfung optisch oder elektrisch gemeint ist.

Ein anderes bekanntes optisches Gitter der eingangs genannten Art geht aus H. Takahashi et al: "Arrayed-Waveguide Grating for Wavelength Division Multi/Demultiplexer with Nanometre Resolution", Electron. Lett. 18., Januar 1990, Vol. 26, No. 2, S. 87-88 hervor. Bei diesem Gitter bestehen die mehreren nebeneinander angeordneten streifenartigen optischen Wellenleiter aus zusammengesetzten Monomode-Glaswellenleitern, die in einer Basisschicht aus Glas ausgebildet und mittels herkömmlicher Photolithographietechnik hergestellt sind. Diese Wellenleiter weisen unterschiedliche Länge und gebogene Abschnitte mit gleichem Radius auf. Auch bei diesem bekannten Gitter weist jeder Wellenleiter auf einer Seite eine Einkoppel-Endfläche zum Einkoppeln eines Anteils einer in das Gitter einzukoppelnden optischen Welle und auf der anderen Seite die Auskoppel-Endfläche zum Auskoppeln dieses Anteils aus dem Wellenleiter auf. Der Unterschied zwischen den optischen Längen zweier benachbarter Wellenleiter ist für alle benachbarten Wellenleiter gleich groß, so daß auch bei diesem bekannten Gitter die in den Wellenleitern geführten Anteile der in das Gitter eingekoppelten optischen Welle von Ausgangsapertur zu Ausgangsapertur eine gegenseitige Phasenverschiebung aufweisen, die für alle Paare benachbarter Wellenleiter gleich groß ist.

Bei einem Ausführungsbeispiel dieses bekannten Gitters sind einhundertundfünfzig Wellenleiter mit jeweils einer Querschnittsabmessung von 1,2 µm x 1,5 µm auf einem Substrat integriert. Der Abstand zwischen jeweils zwei benachbarten Wellenleitern beträgt 8 µm und der Radius jedes gebogenen Abschnitts ist 1 mm gewählt. Benachbarte Wellenleiter sind in ihrer Länge um 17,54 µm verschieden. Mit diesem Ausführungsbeispiel kann eine Wellenlängenauflösung von weniger als 1 nm erhalten werden. Die in das Gitter einzukoppelnde optische Welle wird über eine Zylinderlinse in die einhundertundfünfzig Wellenleiter eingekoppelt. Bei einer Wellenlänge von 1,3 µm konnte die Wellenlängenauflösung experimentell auf 0,63 nm veranschlagt werden.

Aufgabe der Erfindung ist es, ein raumsparendes Gitter der eingangs genannten Art anzugeben.

Diese Aufgabe wird durch die im kennzeichnenden Teil des Patentanspruchs 1 angegebenen Merkmale gelöst.

Ein Vorteil des erfindungsgemäßen Gitters ist darin zu sehen, daß zugleich eine raumsparende "Fan-In"-Struktur realisiert ist, durch die ein einfaches Einkoppeln und Verteilen einer optischen Welle in das bzw. im Gitter ermöglicht ist, und die problemlos und ohne Zwischenschaltung von optischen Linsen und/oder freier Strahlausbreitung an einen die optische Welle zuführenden optischen Wellenleiter unmittelbar ankoppelbar ist.

Der Begriff des streifenartigen optischen Wellenleiters ist bei dem erfindungsgemäßen Gitter sehr breit aufzufassen. Unter diesen Begriff fallen alle Wellenleiter, in denen sich eine optische Welle im wesentlichen nur in einer Richtung und nicht wie bei flächenhaften Wellenleiterschichten in zwei Richtungen ausbreitet. Die streifenartigen Wellenleiter können integrierte Wellenleiter, beispielsweise Rippenwellenleiter oder vergrabene Wellenleiter, oder Fasern sein.

Wie bei den herkömmlichen Gittern der eingangs genannten Art können bei dem erfindungsgemäßen Gitter die von einem ersten Verzweigungspunkt der Wellenleiterstruktur ausgehenden und zu verschiedenen Auskoppelendflächen führenden durchgehenden Wellenleiterpfade verschiedene optische Längen aufweisen, insbesondere derart, daß die Längendifferenz zwischen benachbarten Auskoppel-Endflächen von Auskoppel-Endfläche zu Auskoppel-Endfläche gleich groß und damit konstant ist. Eine verschiedene optische Länge der Wellenleiterpfade wird bei dem erfindungsgemäßen Wellenleitergitter vorzugsweise dadurch erreicht, daß zwei an einem Verzweigungspunkt sich verzweigende streifenartige optische Wellenleiter der Wellenleiterstruktur eine verschiedene optische Länge aufweisen (Anspruch 2). Diese Maßnahme ist raumsparend.

Bevorzugterweise ist bei dem erfindungsgemäßen Gitter die Wellenleiterstruktur derart ausgebildet, daß eine einem Verzweigungspunkt zugeführte optische Welle auf die an diesem Punkt sich verzweigenden streifenartigen optischen Wellenleiter zu gleichen Teilen aufgeteilt ist (Anspruch 3). Dadurch kann im Bedarfsfall erreicht werden, daß die aus den Auskoppel-Endflächen ausgekoppelten und danach überlagerten Anteile der dem Gitter zugeführten optischen Welle gleich groß sind.

Bevorzugterweise ist bei der Wellenleiterstruktur des erfindungsgemäßen Gitters ein Verzweigungspunkt durch eine Wellenleitergabel aus y-förmig sich verzweigenden streifenartigen Wellenleitern definiert (Anspruch 4).

Durch die Wahl unterschiedlicher optischer Längen für die zu den verschiedenen Auskoppel-Endflächen führenden durchgehenden Wellenleiterpfade kann erreicht werden, daß die in diesen Pfaden geführten und aus den verschiedenen Auskoppel-Endflächen ausgekoppelten Anteile der in das Gitter eingekoppelten optischen Welle gegeneinander phasenverschoben sind. Durch solche Phasenverschiebungen kann das vom Gitter durch Überlagerung der ausgekoppelten Anteile erzeugte Beugungsbild modifiziert werden. Darüberhinaus kann das Beugungsbild durch einen systematischen Phasengang modifiziert werden. Ein solcher systematischer Phasengang kann dadurch erreicht werden, daß eine Auskoppel-Endfläche eines optischen Wellenleiters schräg zur Ausbreitungsrichtung einer in diesem Wellenleiter geführten optischen Welle angeordnet ist (Anspruch 5). Durch eine solche Schrägstellung kann ein systematischer Phasengang innerhalb der Endfläche beispielsweise erreicht werden, wenn diese Endfläche eine brechende Endfläche ist, die durch einen Brechzahlsprung definiert ist.

Der systematische Phasengang kann nicht nur bei dem erfindungsgemäßen Gitter, sondern bei Gittern der eingangs genannten Art generell, beispielsweise bei den vorstehend beschriebenen bekannten Gittern durch Schrägstellen der Auskoppel-Endflächen realisiert werden.

Das erfindungsgemäße Gitter kann als uni- und bidirektionaler Vielfach-Wellenlängenmultiplex/Demultiplex-Koppler für die integrierte Optik verwendet werden. Es können monolithisch integrierte Bausteine auf InGaAsP/InP für mittlere Kanalabstände von 20 nm realisiert werden.

Die Erfindung wird anhand der Figuren in der nachfolgenden Beschreibung beispielhaft näher erläutert. Es zeigen:

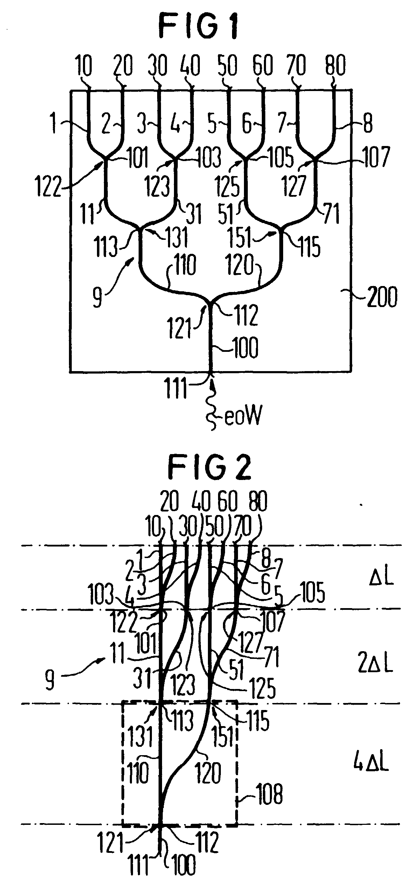

Figur 1    eine Draufsicht auf ein schematisch dargestelltes erfindungsgemäßes optisches Gitter mit einer Wellenleiterstruktur und acht Ausgangsaperturen,

Figur 2    eine Draufsicht auf ein Ausführungsbeispiel des erfindungsgemäßen Gitters nach Figur 1, bei dem von einem ersten Verzweigungspunkt der Wellenleiterstruktur zu verschiedenen Ausgangsaperturen führende durchgehende Wellenleiterpfade dieser Struktur verschiedene optische Länge haben,

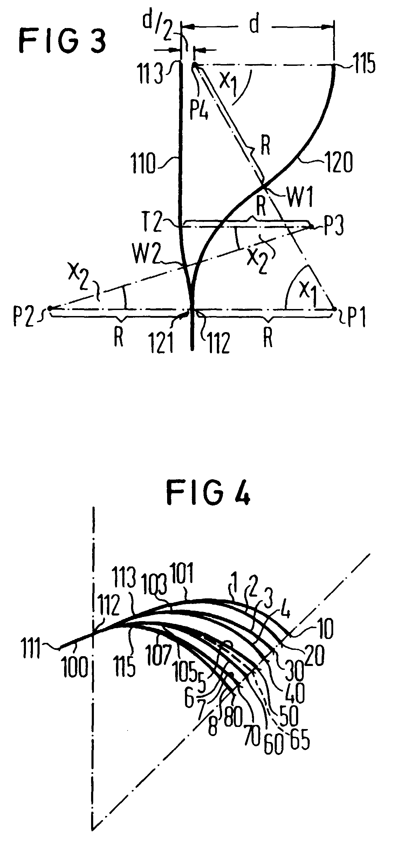

Figur 3    den rechteckförmig gestrichelt umrahmten Bereich in Figur 2 mit der darin enthaltenen Wellenleitergabel in vergrößerter Darstellung zur Erläuterung des Konstruktionsprinzips,

Figur 4    ein anderes Ausführungsbeispiel des erfindungsgemäßen Gitters nach Figur 1 mit im Vergleich zum Beispiel nach Figur 2 anders geformten Wellenleitergabeln, wobei wie beim Beispiel nach Figur 2 zu verschiedenen Ausgangsaperturen führende durchgehende Wellenleiterpfade der baumartigen Wellenleiterstruktur verschiedene optische Länge haben,

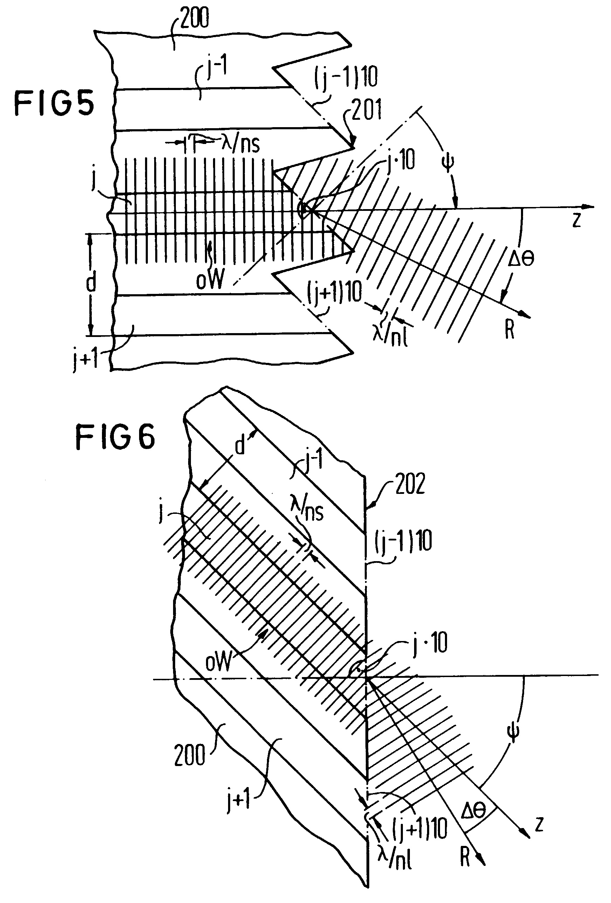

Figur 5    einen vergrößert dargestellten Ausschnitt aus einem ausgangsseitigen Endabschnitt eines Ausführungsbeispiels eines erfindungsgemäßen Gitters mit schräg zur Ausbreitungsrichtung der in den Wellenleitern geführten Anteile der in das Gitter eingekoppelten optischen Welle angeordneten Auskoppel-Endflächen, die einen systematischen Phasengang bewirken,

Figur 6    einen vergrößert dargestellten Ausschnitt aus einem ausgangseitigen Endabschnitt eines anderen Ausführungsbeispiels des erfindungsgemäßen Gitters mit schräg zur Ausbreitungsrichtung der in den Wellenleitern geführten Anteile der in das Gitter eingekoppelten optischen Welle angeordneten Auskoppel-Endflächen, die einen systematischen Phasengang bewirken.

Bei dem Gitter nach Figur 1 sind beispielsweise acht Wellenleiter 1 bis 8 mit Auskoppel-Endflächen 10 bis 80 durch eine Wellenleiterstruktur 9 aus baumartig sich verzweigenden Wellenleitern 110, 120, 11, 31, 51 und 71 mit einem einzelnen Einkoppelwellenleiter 100 mit einer Einkoppel-Endfläche 111 verbunden, über welche eine optische Welle eoW in diesen Wellenleiter 100 einkoppelbar ist. Das Gitter kann beispielsweise auf einem Substrat 200 integriert sein, z.B. in InGaAsP/InP-Strukturen. Die eingekoppelte Welle wird in dem Wellenleiter 100 zu einer an einem ersten Verzweigungspunkt 112 der Wellenleiterstruktur 9 beginnenden ersten Wellenleitergabel 121 geführt und dort zu vorzugsweise gleichen ersten Anteilen auf zwei abzweigende Wellenleiter 110 und 120 aufgeteilt, in denen diese Anteile zu zwei jeweils an einem zweiten Verzweigungspunkt 113 bzw. 115 der Wellenleiterstruktur 9 beginnenden zweiten Wellenleitergabeln 131 und 151 geführt werden. An jeder zweiten Wellenleitergabel 131 und 151 wird der zugeführte erste Anteil jeweils zu vorzugsweise gleichen zweiten Anteilen auf zwei abzweigende Wellenleiter 11 und 31 bzw. 51 und 71 aufgeteilt, in denen diese zweiten Anteile zu zwei jeweils an einem dritten Verzweigungspunkt 101 und 103 bzw. 105 und 107 der Wellenleiterstruktur 9 beginnenden dritten Wellenleitergabeln 122 und 123 bzw. 125 und 127 geführt werden.

An jedem der insgesamt vier dritten und letzten Verzweigungspunkte 101 bis 107 wird der zugeführte zweite Anteil zu vorzugsweise gleichen dritten Anteilen auf die zwei betreffenden Wellenleiter 1 und 2, 3 und 4, 5 und 6 bzw. 7 und 8 aufgeteilt und in diesen Wellenleitern den betreffenden Auskoppel-Endflächen 10 und 20, 30 und 40, 50 und 60 bzw. 70 und 80 zugeführt.

Von den Wellenleiterpfaden, die von der Einkoppel-Endfläche 111 durch die Wellenleiterstruktur 9 zu den verschiedenen Auskoppel-Endflächen 10 bis 80 führen, ist der zur Auskoppel-Endfläche 10 führende Wellenleiterpfad aus den aufeinanderfolgenden Wellenleitern 100, 110, 11 und 1 gebildet. Die aufeinanderfolgenden Wellenleiter 100, 110, 11 und 2 bilden zusammen den zur Auskoppel-Endfläche 20 führenden Wellenleiterpfad. Der aus den aufeinanderfolgenden Wellenleitern 100, 110, 31 und 3 gebildete Wellenleiterpfad führt zur Auskoppel-Endfläche 30, während der zur Auskoppel-Endfläche 40 führende Wellenleiterpfad durch die aufeinanderfolgenden Wellenleiter 100, 110, 31 und 4 gebildet ist.

Zur Auskoppel-Endfläche 50 führt der aus den aufeinanderfolgenden Wellenleitern 100, 120, 51 und 5 gebildete Wellenleiterpfad, während der zur Auskoppel-Endfläche 60 führende Wellenleiterpfad aus den aufeinanderfolgenden Wellenleitern 100, 120, 51 und 6 gebildet. Der aus den aufeinanderfolgenden Wellenleitern 100, 120, 71 und 7 gebildete Wellenleiterpfad führt zur Auskoppel-Endfläche 70 und schließlich führt der aus den aufeinanderfolgenden Wellenleitern 100, 120, 71 und 8 gebildete Wellenleiterpfad zur Auskoppel-Endfläche 80.

Die Wellenleiterstruktur nach Figur 1 hat drei Verzweigungsebenen, eine erste mit dem ersten Verzweigungspunkt 112, eine zweite mit den beiden zweiten Verzweigungspunkten 113 und 115 und die dritte mit den vier Verzweigungspunkten 101, 103, 105 und 107. Dadurch können acht Auskoppel-Endflächen 10 bis 80 erhalten werden. Allgemein können für eine Verzweigungsstruktur nach Figur 1 mit n Verzeigungsebenen, wobei n eine beliebige natürliche Zahl ist, $2^n$ Auskoppel-Endflächen erhalten werden.

Eine Wellenleiterstruktur nach Figur 1 mit allgemein n Verzweigungsstufen kann so gestaltet sein, daß alle von der Einkoppel-Endfläche zu den verschiedenen Auskoppel-Endflächen führenden Wellenleiterpfade die gleiche optische Länge aufweisen oder so, daß Wellenleiterpfade mit verschiedener optischer Länge vorhanden sind, wobei insbesondere alle Wellenleiterpfade voneinander verschiedene optische Längen haben können.

Ein Gitter nach Figur 1, bei dem von Ausgangs-Endfläche zu Ausgangs-Endfläche eine konstante Phasenverschiebung vorhanden sein soll und bei dem sich demnach die optische Länge der Wellenleiterpfade von Auskoppel-Endfläche zu Auskoppel-Endfläche um eine konstante optische Längendifferenz $\Delta L$ ändern, kann mit einer Verzweigungsstruktur mit n Verzweigungsebenen wie folgt erhalten werden: Die von jedem Verzweigungspunkt der n-ten und damit letzten Verzweigungsebene zu den beiden diesem Punkt zugeordneten benachbarten Auskoppel-Endflächen führenden beiden Wellenleiter unterscheiden sich in ihrer optischen Länge um $\Delta L$. Die von jedem Verzweigungspunkt der i-ten Verzweigungsebene zu den beiden diesem Punkt zugeordneten Verzweigungspunkten der (i+1)-ten Verzweigungsebene führenden Wellenleiter unterscheiden sich in ihrer optischen Länge um $2^{n-i} \Delta L$, wobei i = 1, 2, ... n-1 gilt. Wenn L die optische Länge des von der Einkoppel-Endfläche zur ersten Auskoppel-Endfläche am Anfang der aus den $2^n$ Auskoppel-Endflächen bestehenden Reihe führenden Wellenleiterpfades bezeichnet, dann beträgt die optische Länge des von der Einkoppel-Endfläche zur j-ten Auskoppel-Endfläche führenden Wellenleiterpfades gleich L+(j-1)$\Delta L$ mit j = 1 bis $2^n$.

Bei dem Ausführungsbeispiel nach Figur 2 sind diese Vorschriften für n = 3 realisiert. Die optischen Längen der vom ersten Verzweigungspunkt 112 und damit der ersten Verzweigungsebene ausgehenden Wellenleiter 110 und 120 unterscheiden sich um 4. $\Delta L$, die optischen Längen der von jedem zweiten Verzweigungspunkt 113 bzw. 115 und damit der zweiten Verzweigungsebene ausgehenden Wellenleiter 11 und 31 bzw. 51 und 71 um 2·$\Delta L$ und die optischen Längen der von jedem dritten Verzweigungspunkt 101, 103, 105 bzw. 107 und damit der dritten und letzten Verzweigungsebene ausgehenden Wellenleiter 1 und 2, 3 und 4, 5 und 6 bzw. 7 und 8 um $\Delta L$. Beträgt die optische Länge des vom ersten Verzweigungspunkt 112 zur Auskoppel-Endfläche 10 führenden Wellenleiterpfades L, dann beträgt die Länge des vom Verzweigungspunkt 112 zur Auskoppel-Endfläche 80 führenden Wellenleiterpfades L+7·$\Delta L$.

Bei dem Ausführungsbeispiel nach Figur 2 sind die von jedem Verzweigungspunkt einer Verzweigungsebene zu den beiden zugeordneten Verzweigungspunkten der nächsten Verzweigungsebene oder den beiden zugeordneten Auskoppel-Endflächen für alle Verzweigungsebenen geometrisch ähnlich und nach einem einheitlichen Konstruktionsprinzip gestaltet.

Dieses Konstruktionsprinzip ist aus der Figur 3, in der stellvertretend für alle anderen betreffenden Wellenleiterpaare die beiden von dem ersten Verzweigungspunkt 112 zu den beiden zweiten Verzweigungspunkten 113 und 115 führenden Wellenleiter 110 und 120 genommen sind (siehe Rahmen 108 in Figur 2), entnehmbar. Nach diesem Prinzip verlaufen die beiden Wellenleiter 110 und 120 auf einer Geraden und auf Kreisbögen. Vom Verzweigungspunkt 112 aus bilden die beiden Wellenleiter 110 und 120 zunächst Kreisbögen mit den Mittelpunkten P2 bzw. P1, wobei sich diese Bögen im Verzweigungspunkt 112 mit einer gemeinsamen Tangente berühren, welche eine Längsachse des zuführenden Wellenleiter 100 bildet. Durch diese Kreisbögen ist eine y-förmige Wellenleiterverzweigung 121 definiert.

Diese Kreisbögen beider Wellenleiter 110 und 120 gehen in Wendepunkten W2 bzw. W1 in entgegengesetzt gekrümmte zweite Kreisbögen mit den Mittelpunkten P3 bzw. P4 über, wobei diese zweiten Bögen in Punkten T2 bzw. 115 jeweils mit einer Tangente der ersten Kreisbögen im Verzweigungspunkt 112 parallelen Tangente enden. Zumindest der Wellenleiter mit der geringeren optischen Länge - im Beispiel der Wellenleiter 110 - verläuft nach dem zweiten Kreisbogen geradlinig in Richtung der Tangente am Endpunkt dieses Kreisbogens - im Beispiel der Punkt T2 - bis zum zugeordneten nächsten Verzweigungspunkt - im Beispiel der Verzweigungspunkt 113 - weiter.

Speziell sind die Radien R aller vier Kreisbögen gleich groß und überdies so gewählt, daß der zweite Kreisbogen des Wellenleiters mit der größeren optischen Länge im Verzweigungspunkt der nächsten Verzweigungsebene endet. Im Beispiel ist dies der Wellenleiter 120, der im Verzweigungspunkt 115 endet.

Unter diesen Bedingungen gelten für eine zu erzielende optische Längendifferenz von $2(n-i)$ $\Delta L$ mit $i = 1$ bis $(n-1)$ und für den Abstand d zwischen den Endpunkten der beiden Wellenleiter die Gleichungen

$$d = R * (2 - \cos\chi_1 - \cos\chi_2)$$

$$\Delta L = 2R * \{(\chi_1 - \sin\chi_1) - (\chi_2 - \sin\chi_2)\}$$

in denen $\chi_2$ der Bogenwinkel jedes der beiden Kreisbögen des Wellenleiters mit der kürzeren optischen Länge und $\chi_1$ der im Vergleich zu $\chi_2$ größere Bogenwinkel jedes der beiden Kreisbögen des Wellenleiters mit der größeren Länge ist.

Die gesamte Verzweigungsstruktur nach Figur 2 setzt sich aus sich verzweigenden Wellenleitern nach Figur 3 zusammen, wobei in jeder der n Verzweigungsebenen die richtige optische Längendifferenz zu wählen ist. Für die i-te Verzweigungsebene mit $i = 1$ bis n ist bei der für die Wellenleiterpfade vorgegebenen optischen Längendifferenz $\Delta L$ die richtige optische Längendifferenz durch $2^{(n-i)} \cdot \Delta L$ gegeben. Überdies soll in jedem Verzweigungspunkt der zuführende Wellenleiter eine Tangente aufweisen, die mit der Tangente der von diesem Punkt fortführenden Wellenleiter zusammenfällt oder zu dieser Tangente ausgerichtet ist.

Die von einem Verzweigungspunkt sich verzweigenden Wellenleiter können auch entlang anderer Kurven als Kreisbögen und Geraden verlaufen. Im Hinblick auf die Erzielung eines kompakten Aufbaus kann es günstig sein, wenn die y-Verzweigungen in den Verzweigungspunkten in sich selbst bereits gekrümmt sind, beispielsweise derart, daß die von einem Verzweigungspunkt sich verzweigenden Wellenleiter einer gekrümmten Linie folgen.

Ein Beispiel für ein solches Gitter nach Figur 1 zeigt Figur 4. Bei diesem Gitter nach Figur 4 verlaufen die von einem Verzweigungspunkt sich verzweigenden Wellenleiter anders als kreisbogenförmig und beidseitig einer gekrümmten Mittellinie, von der die sich verzweigenden Wellenleiter in jedem Punkt gleich beabstandet sind. Ein Beispiel einer solchen Mittellinie ist in der Figur 4 für den Verzweigungspunkt 105 und die davon abzweigenden Wellenleiter 5 und 6 gestrichelt dargestellt und mit 65 bezeichnet.

Das Gitter nach Figur 4 ist sehr kompakt und weist die Eigenschaft des Gitters nach Figur 2 auf, d.h. die optische Länge der von der Einkoppel-Endfläche 111 des Gitters zu den Auskoppel-Endflächen 10 bis 80 führenden Wellenleiterpfade ändert sich von Auskoppel-Endfläche zu Auskoppel-Endfläche, um eine optische Längendifferenz $\Delta L$.

Bei dem in Figur 5 dargestellten Ausschnitt aus einem ausgangsseitigen Endabschnitt eines erfindungsgemäßen Gitters enden die auf dem Substrat 200 integrierten, parallel in z-Richtung verlaufenden streifenförmigen Wellenleiter $1, 2, ...j-1, j, j+1, ..., 2^n$, von denen der Übersichtlichkeit halber nur drei benachbarte Wellenleiter $j-1$, $j$ und $j+1$ dargestellt sind, an einer sägezahnförmig strukturierten optisch brechenden Fläche 201, welche die Wirkungsweise eines klassischen Blaze-Gitters weitgehend simuliert. Die Wellenleiter enden in zugeordneten Flächenabschnitten der Endfläche 201, die im gleichen Winkel schräg zur z-Richtung geneigt sind und jeweils eine optisch brechende Auskoppel-Endfläche für den betreffenden Wellenleiter bilden. In der Figur 5 sind diese Auskoppel-Endflächen bildenden Flächenabschnitte für die Wellenleiter $j-1$, $j$, $j+1$ mit $(j-1)10$, $j10$ und $(j+1)10$ bezeichnet.

Eine in jedem dieser Wellenleiter in z-Richtung zur Auskoppel-Endfläche geführte optische Welle oW tritt an dieser Auskoppel-Endfläche in einer zum Maximum der Envelope des von diesem Gitter erzeugten und durch eine Beugungsfunktion beschreibbaren Beugungsbildes weisenden Richtung R aus, die um eine Winkeldifferenz von $\Delta\theta$ zur z-Richtung geneigt ist. Diese Winkeldifferenz $\Delta\theta$ bestimmt sich durch die Gleichung

$$\sin\Delta\theta = \frac{n_s}{n_L} \sin\Psi \cos\Psi - \sqrt{1 - (\frac{n_s}{n_L})^2 \sin^2\Psi} \, \sin\Psi$$

wobei $n_s$ die Brechzahl des Wellenleiters, $n_L$ die Brechzahl eines an der Auskoppel-Endfläche an den Wellenleiter angrenzenden Mediums und den Winkel zwischen dem auf die Auskoppel-Endfläche gefällten Lot und der z-Richtung bedeuten.

Für kleine Brechzahlsprünge $\Delta n = n_s - n_L$ kann diese Gleichung näherungsweise durch

$$\sin\Delta\theta \approx \frac{\Delta_n}{n_L} \tan\Psi$$

ersetzt werden.

Diese Gleichungen sind nicht auf die spezielle Ausführungsform nach Figur 5 beschränkt, sondern gelten für alle Ausführungsformen, bei denen an den Auskoppel-Endflächen ein Brechzahlsprung $\Delta n$ vorhanden ist und diese Endflächen unter einem Winkel schräg zur Ausbreitungsrichtung z der in den zu diesen Endflächen führenden Wellenleitern geführten optischen Wellen angeordnet sind.

Wird bei solchen Ausführungsformen gleichzeitig dafür gesorgt, daß die Phase der geführten optischen Welle im Zentrum jeder Auskoppel-Endfläche bei jeder Wellenlänge $\lambda$ übereinstimmt, wird die Envelope des Beugungsbildes verschoben, die Lage der einzelnen Beugungsordnungen im Beugungsbild relativ zueinander bleibt jedoch erhalten. Dies kann mit einem Gitter erreicht werden, bei dem die von der Einkoppel-Endfläche zu den verschiedenen Auskoppel-Endflächen führenden Wellenleiterpfade alle die gleiche optische Länge haben. Bei dem Gitter nach Figur 4 kann dies durch eine völlig symmetrische Wellenleiter-Verzweigungsstruktur erreicht werden, wobei sich ein besonders kompakter Aufbau ergibt, weil zusätzliche optische Wege zur Realisierung eines Gangunterschiedes von Auskoppel-Endfläche zu Auskoppel-Endfläche entfallen.

Zur Erzielung einer möglichst großen Winkeldifferenz $\theta$ ist es günstig, $\Delta n$ möglichst groß zu wählen. Bei integrierten Streifenwellenleitern ist $n_s$ in relativ engen Grenzen vorgegeben. Die Brechzahl $n_L$ des angrenzenden Mediums kann dagegen durch geeignete Wahl dieses Mediums in einem größeren Bereich variiert werden. Wählt man für dieses Medium beispielsweise nicht einen Schichtwellenleiter, sondern ein homogenes Medium, beispielsweise Luft, so erreicht man ausreichend hohe Brechzahlsprünge $\Delta n$ und damit große Winkeldifferenzen $\Delta\theta$. Zur Fokussierung des gebeugten Lichts auf eine Detektorzeile wird dann zweckmäßigerweise eine asphärische Optik, beispielsweise eine Zylinderlinse verwendet, da das Nahfeld des Streifenwellenleiters und damit die Envelope des Beugungsbildes näherungsweise kreisförmig sind.

Bei dem in Figur 6 dargestellten Ausschnitt aus einem ausgangsseitigen Endabschnitt eines erfindungsgemäßen Gitters mit systematischem Phasengang enden die auf dem Substrat 200 integrierten, parallel in z-Richtung verlaufenden Wellenleiter j-1, j, j+1 in einer ebenen optischen brechenden Fläche 202, die schräg zur z-Richtung angeordnet ist. Die wie bei der Figur nach Figur 5 mit (j-1)10, j10 und (j+1)10 bezeichneten Auskoppel-Endflächen der Wellenleiter j-1, j bzw. j+1 liegen beim Beispiel nach Figur 6 in der Ebene der Endfläche 202. Das auf die Endfläche 202 gefällte Lot schließt mit der z-Richtung den Winkel $\Psi$ ein und eine in einem Wellenleiter geführte optische Welle oW breitet sich nach dem Austritt aus der betreffenden Auskoppel-Endfläche in den zum Maximum der Envelope des Beugungsbildes weisenden Richtung R aus, die mit der z-Richtung die Winkeldifferenz $\Delta\theta$ einschließt.

Bei dieser Ausführungsform nach Figur 6 muß der Phasenunterschied von Auskoppel-Endfläche zu Auskoppel-Endfläche durch eine geeignete Wellenleiter-Verzweigungsstruktur verhindert werden. Man kann dies beispielsweise durch die Führung der Wellenleiter auf konzentrischen äquidistanten Kreisbögen entlang eines Segments mit einem Öffnugnswinkel $\chi = \tan\Psi$ erreichen.

Man kann auch von einem Gitter von Figur 2 oder Figur 4 ausgehen, bei dem die zu den Auskoppel-Endflächen 10 bis 80 führenden Wellenleiter 1 bis 8 stark verlängert sind, so daß geradlinige, gleichlange und parallele Endabschnitte dieser Wellenleiter vorhanden sind, die an den Auskoppel-Endflächen enden. Die von der Einkoppel-Endfläche zu den Auskoppel-Endflächen führenden optischen Wellenleiterpfade unterscheiden sich auch bei einem solchen Gitter von Auskoppel-Endfläche zu Auskoppel-Endfläche um die optische Längendifferenz $\Delta L$. Durch einen geradlinig geführten Schnitt schräg zur Längsrichtung der geradlinigen, parallelen Wellenleiterabschnitte können diese so verkürzt werden, daß die von der Einkoppel-Endfläche bis zu der der Endfläche 202 in Figur 6 entsprechenden Schnittfläche führenden optischen Wellenleiterpfade gleiche optische Länge aufweisen. Dadurch ist ein Gitter nach Figur 6 realisiert, das nur einen systematischen Phasengang, nicht aber einen Phasengang von Auskoppel-Endfläche zu Auskoppel-Endfläche aufweist.

Die schräge Anordnung der Auskoppel-Endflächen zur Ausbreitungsrichtung der in Wellenleitern geführten optischen Welle kann bei der Dimensionierung von Vorteil sein, insbesondere wenn sich Freistrahlausbreitung und Nichtführung in einem Schichtwellenleiter anschließt.

Man kann durch leichte Modifikation der erfindungsgemäßen Wellenleiterstruktur, ähnlich wie bei der eingangs genannten Fundstelle Electron. Lett. 24, eine selbstfokussierende Wirkung erzielen, so daß abbildende Linsen überflüssig sind und das aus den Auskoppel-Endflächen austretende, interferierende Licht direkt auf Detektoren fokussiert werden kann, wobei dieses Licht in einem an die Auskoppel-Endflächen anschließenden Schichtwellenleiter geführt werden kann.

Diese fokussierende Wirkung kann dadurch erreicht werden, daß die optischen Längen L von Wellenleiterpfaden, die von der Einkoppel-Endfläche der Wellenleiterstruktur zu den verschiedenen Auskoppel-Endflächen führen, derart gewählt sind, daß das Gitter selbstfokussierend wirkt. Beispielsweise ist dann das obengenannte ΔL nicht konstant, sondern eine z.B. schwach sich ändernde Funktion des Ortes.

## Patentansprüche

1. Optisches Wellenleiter-Gitter bestehend aus einer Wellenleiterstruktur (9) mit mehreren streifenartigen optischen Wellenleitern (1 bis 8; j-1, j, j+1) zum jeweiligen Führen einer optischen Welle (oW) deren Auskoppel-Endflächen (10 bis 80; (j-1)10, j10, (j+1)10) in einem geringen, eine Gitterkonstante des Gitters definierenden Abstand nebeneinander angeordnet sind, derart daß sich die in den Wellenleitern (1 bis 8; j-1, j, j+1) geführten optischen Wellen (oW) nach dem Auskoppeln aus den Auskoppel-Endflächen (10 bis 80; (j-1)10, j10, (j+1)10) zu einem Beugungsbild überlagern, **gekennzeichnet dadurch** daß die Wellenleiterstruktur (9) aus einem, eine einzige Einkoppel-Endfläche (111) zum Einkoppeln einer in das Gitter einzukoppelnden optischen Welle (eoW) aufweisenden Einkoppelwellenleiter (100) und aus von dem Einkoppelwellenleiter (100) ausgehenden, sich an Verzweigungspunkten (112, 131, 151, 101, 103, 105, 107) verzweigenden und an den Auskoppel-Endflächen (10 bis 80; (j-1)10, j10, (j+1)10) endenden streifenartigen optischen Wellenleitern (100, 110, 120, 11, 31, 51, 71, 1 bis 8) besteht.

2. Gitter nach Anspruch 1, **dadurch gekennzeichnet**, daß zwei an einem Verzweigungspunkt (112, 131, 151, 101, 103, 105, 107) sich verzweigende streifenartige optische Wellenleiter (110, 120; 11, 31; 51, 71; 1, 2; 3, 4; 5, 6; bzw. 7,8) der Wellenleiterstruktur (9) eine voneinander verschiedene optische Länge aufweisen.

3. Gitter nach Anspruch 1 oder 2, **dadurch gekennzeichnet**, daß eine einem Verzweigungspunkt (112, 113, 115, 101, 103, 105, 107) der Wellenleiterstruktur (9) zugeführte optische Welle auf die an diesem Punkt sich verzweigenden streifenartigen optischen Wellenleiter (110, 120; 11, 31; 51, 71; 1, 2; 3, 4; 5, 6; bzw. 7,8) zu gleichen Teilen aufgeteilt ist.

4. Gitter nach einem der vorhergehenden Ansprüche, **dadurch gekennzeichnet**, daß ein Verzweigungspunkt (112, 113, 115, 101, 103, 105, 107) der Wellenleiterstruktur (9) durch eine Wellenleitergabel (121, 131, 151, 122, 123, 125, 127) aus y-förmig sich verzweigenden streifenartigen Wellenleitern definiert ist.

5. Gitter nach einem der vorhergehenden Ansprüche, **dadurch gekennzeichnet**, daß die Auskoppel-Endfläche ((j-1)10, j10, (j+1)10) jedes optischen Wellenleiters (j-1, j, j+1) schräg zur Ausbreitungsrichtung (z) einer in diesem Wellenleiter (j-1, j, j+1) geführten optischen Welle (oW) angeordnet ist.

6. Gitter nach einem der vorhergehenden Ansprüche, **dadurch gekennzeichnet**, daß die optischen Längen (L) von Wellenleiterpfaden, die von der Einkoppel-Endfläche (111) der Wellenleiterstruktur (9) zu den verschiedenen Auskoppel-Endflächen (10 bis 80) führen, derart gewählt sind, daß das Gitter selbstfokussierend wirkt.

## Claims

1. Optical waveguide grating comprising a waveguide structure (9), having a plurality of strip-shaped optical waveguides (1 to 8; j-1, j, j+1) for respectively guiding an optical wave (oW) whose output end faces (10 to 80; (j-1)10, j10, (j+1)10) are juxtaposed, at a small spacing which defines a grating constant of the grating, in such a way that the optical waves (oW) guided in the waveguides (1 to 8; j-1, j, j+1) are superimposed to form a diffraction pattern after being output from the output end faces (10 to 80; (j-1)10, j10, (j+1)10), characterized in that the waveguide structure (9) comprises a launching waveguide (100), which has a single launching end face (111) for launching an optical wave (eoW) to be launched into the grating, and strip-shaped optical waveguides (100, 110, 120, 11, 31, 51, 71, 1 to 8), which emanate from the launching waveguide (100), branch at branching points (112, 131, 151, 101, 103, 105, 107), and end at the output end faces (10 to 80; (j-1)10, j10, (j+1)10).

2. Grating according to Claim 1, characterized in that two strip-shaped optical waveguides (110, 120; 11, 31; 51, 71; 1, 2; 3, 4; 5, 6; and 7, 8), branching at a branching point (112, 131, 151, 101, 103, 105, 107), of the waveguide structure (9) have an optical length differing from one another.

3. Grating according to Claim 1 or 2, characterized in that an optical wave fed to a branching point (112, 113, 115, 101, 103, 105, 107) of the waveguide structure (9) is divided into equal parts between the strip-shaped optical waveguides (110, 120; 11, 31; 51, 71; 1, 2; 3, 4; 5, 6; and 7, 8) branching at this point.

**4.** Grating according to one of the preceding claims, characterized in that a branching point (112, 113, 115, 101, 103, 105, 107) of the waveguide structure (9) is defined by a waveguide fork (121, 131, 151, 122, 123, 125, 127) composed of strip-shaped waveguides branching in the shape of a y.

**5.** Grating according to one of the preceding claims, characterized in that the output end faces ((j-1)10, j10, (j+1)10) of each optical waveguide (j-1, j, j+1) is arranged obliquely relative to the propagation direction (z) of an optical wave (oW) guided in this waveguide (j-1, j, j+1).

**6.** Grating according to one of the preceding claims, characterized in that the optical lengths (L) of waveguide paths, which lead from the launching end face (111) of the waveguide structure (9) to the various output end faces (10 to 80), are selected in such a way that the grating acts in a self-focusing fashion.

## Revendications

**1.** Réseau optique de guides d'onde, comprenant une structure de guides d'onde (9) avec plusieurs guides d'onde optiques (1 à 8 ; j - 1, j, j + 1) du type ruban pour transporter à chaque fois une onde optique (oW), dont les bouts de sortie (10 à 80 ; (j-1) 10, j10, (j+1)10) sont disposés côte à côte à une faible distance définissant une constante de réseau du réseau, de sorte que les ondes optiques (oW) transportées dans les guides d'onde (1 à 8 ; j - 1, j, j + 1), après qu'elles sont sorties des bouts de sortie (10 à 80 ; (j - 1)10, j10, (j+1)10), se recouvrent en formant une image diffractée, caractérisé en ce que la structure de guides d'onde (9) comprend un guide d'onde d'entrée (100) comportant un seul bout d'entrée (111) pour l'entrée d'une onde optique (eoW) à faire entrer dans le réseau et des guides d'onde optiques (100, 110, 120, 11, 31, 51, 71, 1 à 8) du type ruban partant du guide d'onde d'entrée (100), se ramifiant aux points de ramification (112, 131, 151, 101, 103, 105, 107) et se terminant aux bouts de sortie (10 à 80 ; (j - 1)10, j10, (j+1)10).

**2.** Réseau selon la revendication 1, caractérisé en ce que deux guides d'onde optiques (110, 120 ; 11, 31 ; 51, 71 ; 1, 2 ; 3, 4 ; 5, 6 ; ou 7, 8) du type ruban de la structure de guides d'onde (9), qui se ramifient à un point de ramification (112, 131, 151, 101, 103, 105, 107), ont une longueur optique différente l'une de l'autre.

**3.** Réseau selon la revendication 1 ou 2, caractérisé en ce qu'une onde optique amenée à un point de ramification (112, 113, 115, 101, 103, 105, 107) de la structure de guides d'onde (9) est répartie à parts égales sur les guides d'onde optiques (110, 120 ; 11, 31 ; 51, 71 ; 1, 2 ; 3, 4 ;5, 6 ; ou 7, 8) du type ruban se ramifiant à ce point.

**4.** Réseau selon l'une des revendications précédentes, caractérisé en ce qu'un point de ramification (112, 113, 115, 101, 103, 105, 107) de la structure de guides d'onde (9) est formé par une fourche de guides d'onde (121, 131, 151, 122, 123, 125, 127) composée de guides d'onde du type ruban se ramifiant en forme de y.

**5.** Réseau selon l'une des revendications précédentes, caractérisé en ce que le bout de sortie ((j - 1) 10, j10, (j + 1)10) de chaque guide d'onde optique (j - 1), j, j + 1) est disposé obliquement par rapport au sens de propagation (z) d'une onde optique (oW) transportée dans ce guide d'onde (j - 1), j, j + 1).

**6.** Réseau selon l'une des revendications précédentes, caractérisé en ce que les longueurs optiques (L) de voies de guides d'onde conduisant du bout d'entrée (111) de la structure de guides d'onde (9) aux différents bouts de sortie (10 à 80) sont choisies de telle sorte que le réseau ait un effet autofocalisant.

# FIG 1

# FIG 2

# FIG 3

# FIG 4

FIG 5

FIG 6